# EUROPÄISCHE PATENTSCHRIFT

(11) **EP 4 129 829 B1**
(45) Veröffentlichungstag und Bekanntmachung des Hinweises auf die Patenterteilung: **24.07.2024**
(21) Anmeldenummer: 21189645.1
(22) Anmeldetag: 04.08.2021
(51) Int. Cl.: B64F 1/305

(54) **KUPPELMODUL ALS SCHNITTSTELLE ZWISCHEN EINER FLUGGASTBRÜCKE ODER -TREPPE UND DEM RUMPF EINES FLUGZEUGS**
COUPLING MODULE AS AN INTERFACE BETWEEN AN AIR PASSENGER BOARDING BRIDGE OR STEPS AND THE FUSELAGE OF AN AIRPLANE
MODULE DE COUPLAGE COMME INTERFACE ENTRE UN PONT OU UN ESCALIER POUR PASSAGERS ET LE FUSELAGE D'UN AVION

(43) Veröffentlichungstag der Anmeldung: 08.02.2023
(73) Patentinhaber: Hübner GmbH & Co. KG, 34123 Kassel (DE)
(72) Erfinder: Schuster, Heinz, 34123 Kassel (DE); Schmelz, Sebastian, 34226 Niestetal (DE); Grimm, Lukas, 34286 Spangenberg (DE)

(56) Entgegenhaltungen:
- EP-A1- 2 463 199
- EP-B1- 3 301 028
- US-A- 5 761 757
- US-A1- 2002 100 128
- US-A1- 2003 229 955

## Beschreibung

Die Erfindung betrifft ein Kuppelmodul zur Verwendung als Schnittstelle zwischen einer Fluggastbrücke oder -treppe und dem Rumpf eines Flugzeugs, umfassend einen Boden, wobei zumindest der Boden an seinem stirnseitigen, dem Flugzeugrumpf zugewandten Ende einen Bodenbumper aufweist. Gegenstand der Erfindung ist ebenfalls eine Fluggastbrücke oder -treppe mit einem Kuppelmodul zur Verwendung als Schnittstelle zwischen der Fluggastbrücke oder -treppe und dem Rumpf eines Flugzeugs.

### STAND DER TECHNIK

Ein Kuppelmodul als Schnittstelle zwischen einer Fluggastbrücke oder einer Fluggasttreppe und dem Rumpf eines Flugzeugs ist aus dem Stand der Technik hinreichend bekannt. Derartige Kuppelmodule sind beispielsweise an der Fluggastbrücke im Bereich des vorderen Endes der Fluggastbrücke angeordnet und bilden den unmittelbaren Übergang zwischen der Fluggastbrücke einerseits und dem Flugzeug andererseits. Ein solches Kuppelmodul als Schnittstelle z. B. für eine Fluggastbrücke umfasst im Einzelnen ein Faltenvordach oder einen Balg, wobei das Faltenvordach in der stirnseitigen Ansicht in etwa U-förmig ausgebildet ist und am stirnseitigen offenen Ende einen Bumper aufweist, mit dem das Faltenvordach durch eine entsprechende Schwenkvorrichtung in Richtung auf den Flugzeugrumpf zu im Bereich des Zugangs des Flugzeugs verschwenkbar ist. Bevor das Faltenvordach auf den Flugzeugrumpf zu verschwenkt wird, wird üblicherweise die Fluggastbrücke oder -treppe mit dem Kuppelmodul relativ nah an das Flugzeug herangefahren, teilweise soweit, bis der Bodenbereich des Kuppelmoduls mit dem frontseitig angebrachten Bodenbumper an dem Flugzeugrumpf anliegt.

Flugzeugrümpfe sind insbesondere im vorderen Bereich des Flugzeugs stark konturiert. Man war stets bestrebt, insbesondere im vorderen Bereich des Flugzeuges ein vollständiges Anliegen des Bodens des Kuppelmoduls am Flugzeug zu gewährleisten. Insofern ist aus der EP 2 463 199 B1 bereits bekannt, den Boden eines Kuppelmoduls zumindest in Teilbereichen segmentierbar zu gestalten. Dies war der Idee geschuldet, dass vor dem Hintergrund, dass gerade bei einem Kuppelmodul, das im Frontbereich eines Flugzeugrumpfes an das Flugzeug im Bereich der Türöffnung angelegt werden soll, zumindest im stark konturierten Bereich des Flugzeugrumpfes die Möglichkeit des spaltfreien Anliegens an dem Flugzeugrumpf ermöglicht werden soll.

Nun ist es jedoch so, dass die neusten Flugzeugrümpfe eine Außenhaut aus Kunststoff aufweisen. Ein unmittelbares Anliegen der Bumpereinrichtung des Kuppelmoduls war nun nicht mehr erwünscht. Vielmehr sollte ein minimaler Abstand, insbesondere zwischen dem Boden des Kuppelmoduls und dem Flugzeugrumpf beibehalten werden. Um dies zu gewährleisten ist aus der EP 3 301 028 B1 bekannt, den Boden des Kuppelmoduls mit einem Frontbereich vielfach zu segmentieren, und so durch Verschieben der einzelnen Segmente in Richtung des Flugzeugrumpfes der Kontur des Flugzeugrumpfes zu folgen, mit dem Ziel, den Abstand zwischen dem Boden des Kuppelmoduls einerseits und dem Flugzeugrumpf andererseits zu minimieren. Die einzelnen Bodensegmente sind hierbei durch einen Bodenbumper miteinander verbunden, sodass im Idealfall der Bodenbumper mit den daran angeordneten Bodensegmenten über seine ganze Länge mit geringem Abstand zu der Außenhaut des Flugzeugs verläuft.

Nun ist bekannt, dass bei speziellen Flugzeugtypen, wie z. B. der Boeing 737 oder 787, nahe dem frontseitigen Zugang im Bereich des Bodens des Zugangs Messeinrichtungen wie z. B. Sensoren und Staurohre angebracht sind, die Schaden nehmen können, wenn der Bodenbumper bei Anlage an dem Flugzeugrumpf diese Messeinrichtungen tangiert.

Um eine Beschädigung der Messeinrichtungen zu vermeiden, ist aus der US 2003/0229955 A1 bekannt, Teile des Bodens teleskopierbar auszugestalten, und so durch Zurückfahren eines Bodensegmentes die Messeinrichtungen vor Beschädigungen zu schützen. Nachteilig hierbei ist, dass im Boden des Kuppelmoduls eine relativ große Öffnung entsteht, die für zu- und aussteigende Passagiere und schlussendlich auch das Flughafenpersonal die Gefahr der Verletzung in sich birgt.

Einen ähnlichen Weg zeigt die US 2002/0100128 A1 auf, wenn dort vorgeschlagen wird, den Bodenteil, der mit den Messeinrichtungen in Kontakt geraten kann, einschließlich des Bumpersegments nach oben zu klappen. Auch hierbei entsteht eine relativ große Öffnung, die die Gefahr in sich birgt, dass Personen, die das Flugzeug verlassen oder besteigen, in die durch das Hochklappen des Bodensegments erzeugte Öffnung hineintreten und stürzen oder sich auf andere Weise verletzen. Des Weiteren besteht die Gefahr, dass bei entstehenden Öffnungen Gegenstände auf das Flugfeld fallen und eine Gefahr für Turbinen bilden.

Weitere Fluggastbrücken sind in der US 5 761 757 A beschrieben.

Auch ist bekannt, den Bodenbumper im Bereich der Messeinrichtungen zu kürzen, was allerdings auch eine Öffnung zum Rumpf des Flugzeugs entstehen lässt, mit den sich daraus ergebenden zuvor beschriebenen Nachteilen.

### OFFENBARUNG DER ERFINDUNG

Die der Erfindung zugrunde liegende Aufgabe besteht demzufolge darin, die Messeinrichtungen vor Beschädigungen durch den Bodenbumper zu schützen und gleichzeitig zu verhindern, dass hierbei Hindernisse auf dem Boden entstehen, die die Gefahr des Stolperns von Personen und ganz allgemein eine Verletzungsgefahr mit sich bringen. Auch soll verhindert werden, dass Gegenstände auf das Flugfeld durch entstehende Öffnungen fallen.

Diese Aufgabe wird ausgehend von einem Kuppelmodul gemäß dem Oberbegriff von Anspruch 1 und ausgehend von einer Fluggastbrücke oder -treppe gemäß Anspruch 13 mit den jeweils kennzeichnenden Merkmalen gelöst. Weitere, die Erfindung verbessernde Maßnahmen sind in den Unteransprüchen angegeben.

Die Aufgabe wird erfindungsgemäß dadurch gelöst, dass der Bodenbumper mindestens ein Bodenbumpersegment aufweist, das mittels eines Gelenks um eine Schwenkachse gegenüber dem Boden des Kuppelmoduls verschwenkbar angeordnet ist, wobei der Boden zumindest ein Bodensegment aufweist. Hierdurch wird die Möglichkeit eröffnet, den Teil des Bodenbumpers aus dem Bereich herauszuschwenken, durch welchen ansonsten die Gefahr der Beschädigung der Messeinrichtungen, wie z. B. der Sensoren und Staurohre, bestehen würde. Die Schwenkachse wird dabei insbesondere durch das Gelenk definiert und erstreckt sich im Wesentlichen in der Haupterstreckungsebene des Bodens.

Das Gelenk ist stirnseitig an, unter oder auf dem Boden des Kuppelmoduls angeordnet. Hierdurch wird die Möglichkeit eröffnet, das verschwenkbare Bodenbumpersegment durch die Anordnung an dem Gelenk in eine Stellung auf oder unter den Boden zu verschwenken, in der das Bodenbumpersegment nicht mehr in Kollision mit den Messeinrichtungen gelangen kann. Das heißt, das Bodenbumpersegment ist verschwenkbar an dem Kuppelmodul angeordnet, das in Kontakt mit den Sensoren oder Messeinrichtungen gelangen könnte.

Das Gelenk kann grundsätzlich beliebig ausgestaltet sein. Es stellt insbesondere zumindest eine Schwenkachse bereit für die verschwenkbare Anordnung des Bodenbumpersegments an dem Boden des Kuppelmoduls. Dazu kann das Gelenk z. B. zwei Gelenkteile aufweisen, die um die Schwenkachse drehbar miteinander verbunden sind. Erfindungsgemäß ist das Gelenk nach Art eines Scharniers ausgebildet, wobei die Schwenkachse in der Haupterstreckungsebene des Bodensegments verläuft und parallel zu dessen Stirnseite orientiert ist. Dabei ist auch die Verwendung eines Filmscharniers möglich.

Das Gelenk kann derart leichtgängig sein, dass es beim Anstoßen an das Messgerät angehoben und verschwenkt wird. Dadurch kann die Gefahr der Beschädigung des Messgeräts weitgehend verhindert werden, selbst wenn vergessen wird, das Bodenbumpersegment manuell hochzuklappen.

Das Bodenbumpersegment kann insbesondere als halbschalenförmiges Element ausgebildet sein. Es kann sich im ausgeklappten Zustand in Flucht zum Bodenbumper befinden. Das Bodenbumpersegment kann - ähnlich wie der restliche Teil des Bodenbumpers - aus einem elastisch nachgiebigen Material ausgebildet sein, um Beschädigungen am Flugzeugrumpf zu vermeiden.

In weiterer Ausgestaltung kann das Gelenk ein schalenförmiges Element zur Aufnahme des Bodenbumpersegments aufweisen. Das Bodenbumpersegment wird insofern durch das insbesondere als Scharnier ausgebildete Gelenk sicher erfasst.

Bei der Verwendung des erfindungsgemäßen Bodenbumpers besteht keine wesentliche Verletzungsgefahr für Passagiere. Zum einen wird dies dadurch erreicht, dass keine oder nur eine kleine Öffnung zum Rumpf des Flugzeugs entsteht. Zum anderen ist es so, dass - selbst wenn ein Passagier gegen das geklappte Bodenbumpersegment treten sollte - einerseits aufgrund des elastisch nachgiebigen Materials des Bodenbumpersegments und andererseits dadurch, dass das Bodenbumpersegment im hochgeschwenkten oder hochgeklappten Zustand auf dem Boden des Kuppelmoduls aufliegt, keine Verletzungsgefahr besteht und insofern eine entstandene Öffnung zum Rumpf des Flugzeugs abgeschirmt ist.

Nach einem weiteren Merkmal der Erfindung kann vorgesehen sein, dass der Boden des Kuppelmoduls im vorderen Endbereich eine Mehrzahl von relativ zueinander verschieblichen Bodensegmenten aufweist. Grundsätzlich besteht durch die Segmentierung des Bodens des Kuppelmoduls in einzelne Bodensegmente durch einzelnes Anfahren der Bodensegmente, die stirnseitig durch den Bodenbumper miteinander verbunden sind, an den Rumpf des Flugzeugs, die Möglichkeit, den Boden entweder spielfrei oder mit geringem Spiel an der Flugzeughaut zur Anlage zu bringen; dies auch in Abhängigkeit von der Empfindlichkeit der Flugzeughülle. Das Gelenk kann dabei z. B. an der Oberseite oder Unterseite des Bodensegments angeordnet sein, um so die verschwenkbare Anordnung des Bodenbumpersegments an dem entsprechenden Bodensegment zu realisieren.

Das verschwenkbare Bodenbumpersegment kann insbesondere einen Endbereich des Bodenbumpers bilden. Es kann aber auch andere Bereiche des Bodenbumpers bilden. Z. B. kann es zwar randseitig angeordnet sein, wobei der Endbereich jedoch von einem feststehenden Bodenbumpersegment gebildet wird.

Generell ist es so, dass der Bodenbumper genau ein verschwenkbares Bodenbumpersegment aufweisen kann. Es können jedoch auch mehrere verschwenkbare Bodenbumersegmente vorgesehen sein. Neben dem oder den verschwenkbaren Bodenbumpersegment(en) kann der Bodenbumper mindestens ein gegenüber dem Boden feststehendes Bodenbumpersegment aufweisen. Wenn mehrere verschwenkbare Bodenbumpersegmente vorgesehen sind, können diese nebeneinander oder beabstandet zueinander mit dazwischen liegenden feststehenden Bodenbumpersegmenten angeordnet sein.

Erfindungsgemäß ist das Gelenk auf der Oberseite des Bodens oder im oberen Bereich der Stirnseite des Bodensegments so angeordnet, dass das verschwenkbare Bodenbumpersegment in seinem aufgeschwenkten Zustand auf dem Boden bzw. seiner begehbaren Oberfläche aufliegt. In dem aufgeschwenkten Zustand kann ein Öffnungswinkel zwischen dem Bodenbumpersegment und der begehbaren Oberfläche des Bodens < 90° betragen. Umgekehrt ist es jedoch erfindungsgemäß auch möglich, das Gelenk auf der Unterseite des Bodens bzw. im unteren Bereich der Stirnseite des Bodensegments anzuordnen. Die Ausführungen zur Befestigung auf der Oberseite gelten hierfür entsprechend.

Das verschwenkbare Bodenbumpersegment kann manuell verschwenkt werden. Alternativ oder zusätzlich kann ein Schwenkantrieb für das verschwenkbare Bodenbumpersegment vorgesehen sein. Es wurde bereits darauf hingewiesen, dass das Gelenk z. B. als Scharnier ausgebildet sein kann. Das Scharnier weist eine Schwenkachse auf, die Bestandteil des Bodenbumpersegments sein kann, das als schalenförmiges Element ausgebildet sein kann. An eine solche Schwenkachse (aber auch unabhängig von dieser konkreten Ausgestaltung der Schwenkachse) bzw. an das Bodenbumpersegment kann der Schwenkantrieb angreifen, beispielsweise in Form eines Aktuators. Mittels des Schwenkantriebs kann das Bodenbumpersegment bei Betätigung des Schwenkantriebs nach oben und/oder nach unten verschwenkt werden. Der Schwenkantrieb kann hierbei derart ausgebildet sein, dass das Bodenbumpersegment in der jeweiligen Endstellung verbleibt. Insbesondere in der abgeklappten Position kann aber eine Art von Freilauf vorgesehen sein, der bewirkt, dass dann, wenn der Schwenkantrieb nicht funktionsfähig sein sollte, das Bodenbumpersegment dennoch nach oben geklappt wird, wenn es an ein Hindernis, z. B. ein Messgerät am Flugzeugrumpf anstößt.

Der Schwenkantrieb kann in weiterer Ausgestaltung von oben oder von unten an die Schwenkachse des Gelenks bzw. an das verschwenkbare Bodenbumpersegment angreifen.

Konkret kann der Schwenkantrieb eine Motoreinheit umfassen, durch die z. B. ein Kettenantrieb oder ein Zahnriemen o. ä. angetrieben wird, welcher letztlich die Schwenkbewegung des Bodenbumpersegments treibt. Es sind aber auch beliebige andere Ausführungsformen für den Schwenkantrieb möglich. Z. B. kann dieser ein Gestänge oder einen Kurbelantrieb umfassen.

Weiter zeichnet sich das Kuppelmodul dadurch aus, dass der Boden des Kuppelmoduls durch einen in der Vorderansicht U-förmigen Balg oder ein U-förmiges Faltenvordach zum Schutz der Passagiere vor Witterungseinflüssen umspannt sein kann.

Gegenstand der Erfindung ist ebenfalls eine Fluggastbrücke oder -treppe mit einem erfindungsgemäßen Kuppelmodul zur Verwendung als Schnittstelle zwischen der Fluggastbrücke oder -treppe und dem Rumpf eines Flugzeugs. In Bezug auf vorteilhafte Ausgestaltungen der erfindungsgemäßen Fluggastbrücke oder -treppe gelten die Ausführungen zu dem erfindungsgemäßen Kuppelmodul entsprechend.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Bodenbumpersegment die Rede ist, so ist dies so zu verstehen, dass genau ein Bodenbumpersegment, zwei Bodenbumpersegmente oder mehrere Bodenbumpersegmente vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: perspektivisch in einer schematischen Darstellung ein Kuppelmodul mit einem verschwenkbar angeordneten Bodenbumpersegment;
- Fig. 2: eine perspektivische Darstellung des Bodens des Kuppelmoduls mit hochgeklappten Bodenbumpersegment in vergrößerter Ansicht;
- Fig. 3: den abgeklappten Zustand des Bodenbumpersegments gemäß der Fig. 2.

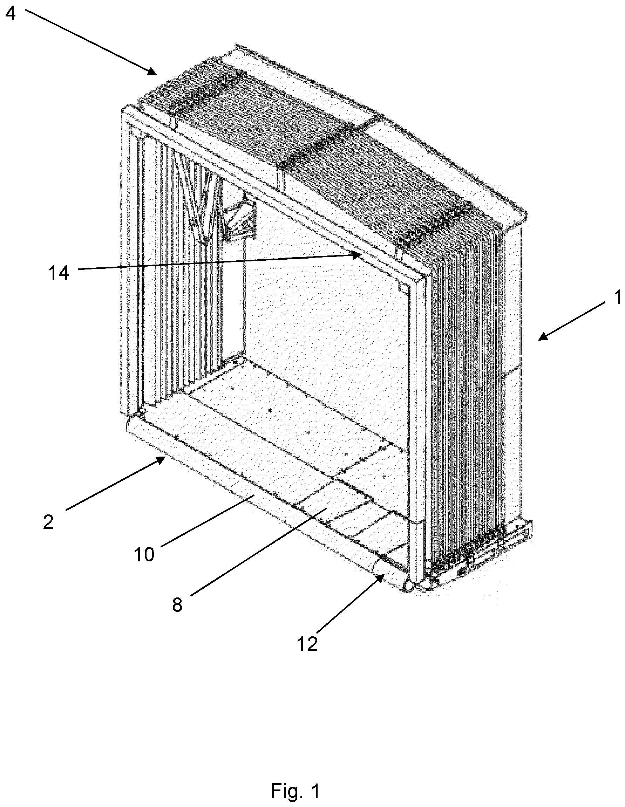

Figur 1 zeigt eine Ausführungsform eines erfindungsgemäßen Kuppelmoduls 1, das einen Boden 2 aufweist, welcher von einem Balg oder Faltenvordach 4 U-förmig umspannt ist. Das Faltenvordach 4 besitzt an seiner vorderen Stirnseite, also der dem Flugzeugrumpf zugewandten Stirnseite, einen entsprechend der Kontur des Faltenvordachs 4 verlaufenden U-förmigen Bumper 14, um bei Anlage des Faltenvordachs 4 des Kuppelmoduls 1 an dem Rumpf des Flugzeugs Beschädigungen zu vermeiden.

Der Boden 2 besitzt bei dem in den Figuren 1 bis 3 dargestellten Ausführungsbeispiel eine Mehrzahl von Bodensegmenten 8, die relativ zueinander in Richtung der vorderen Stirnseite des Kuppelmoduls 1 verschieblich sind, um wie auch bei dem Faltenvordach, den Boden der Kontur des Flugzeugrumpfs nachführen zu können. Verbunden sind die Bodensegmente 8 an der vorderen Stirnseite durch einen Bodenbumper 10, um Beschädigungen durch die Stirnseite des Bodens 2 am Rumpf des Flugzeugs zu vermeiden. Sowohl der Bumper 14 des Faltenvordachs 4 als auch der Bodenbumper 10 wie auch das Bodenbumpersegment 12 können z. B. aus elastisch nachgiebigem Material ausgebildet sein.

Es wurde bereits darauf hingewiesen, dass bei bestimmten Flugzeugtypen im Bereich der Türöffnung des Flugzeugs Messgeräte angeordnet sind, die vor Beschädigungen geschützt werden müssen. Diese Messgeräte befinden sich üblicherweise im Bereich des Bodens 2 des Kuppelmoduls 1, sodass, wenn das Kuppelmodul 1 am Rumpf angelegt wird, die Messgeräte durch den Boden 2 beschädigt werden könnten. Um eine Beschädigung der Messgeräte zu vermeiden, weist der Boden 2 in dem Bereich, wo er in Kontakt mit den Messgeräten gelangen kann, ein Bodenbumpersegment 12 auf, das durch ein Gelenk relativ zu dem übrigen Bodenbumper 10 im Einbauzustand um eine Schwenkachse verschwenkbar an dem Bodensegment 8 angeordnet ist. Bei dem in den Figuren dargestellten Ausführungsbeispiel ist das Gelenk nach Art eines Scharniers 16 ausgebildet. Die Schwenkachse verläuft dabei in der Haupterstreckungsebene des Bodensegments 8 und ist parallel zu dessen Stirnseite orientiert.

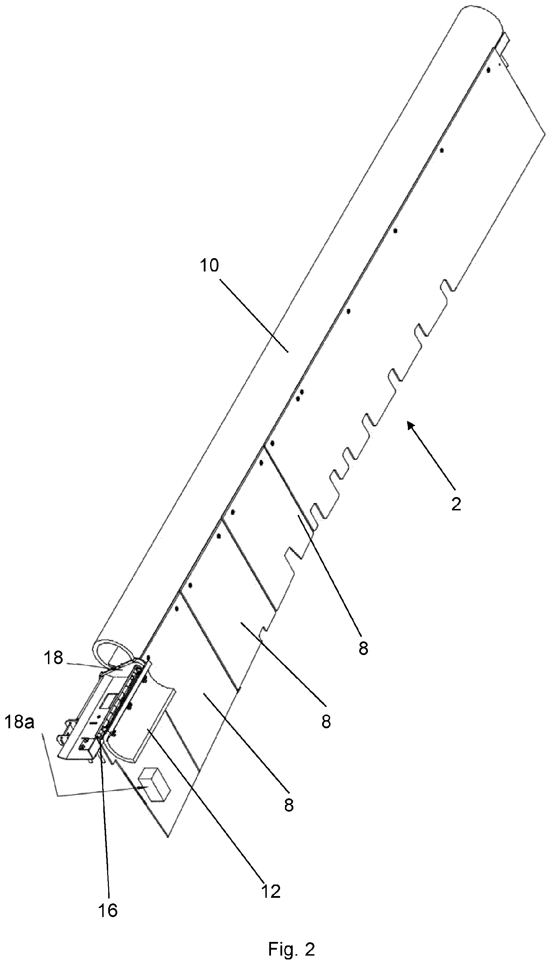

Das Scharnier 16 ist bei dem dargestellten Ausführungsbeispiel auf der Oberseite des Bodensegments 8 angeordnet, sodass das Bodenbumpersegment 12 nach oben aus dem Bereich der Messgeräte herausgeschwenkt oder hochgeklappt werden kann (Fig. 2). Gemäß einer nicht dargestellten Ausführungsform kann das Gelenk jedoch auch auf der Unterseite des Bodensegments 8 angeordnet sein, wobei das Bodenbumpersegment 12 nach unten geschwenkt werden kann.

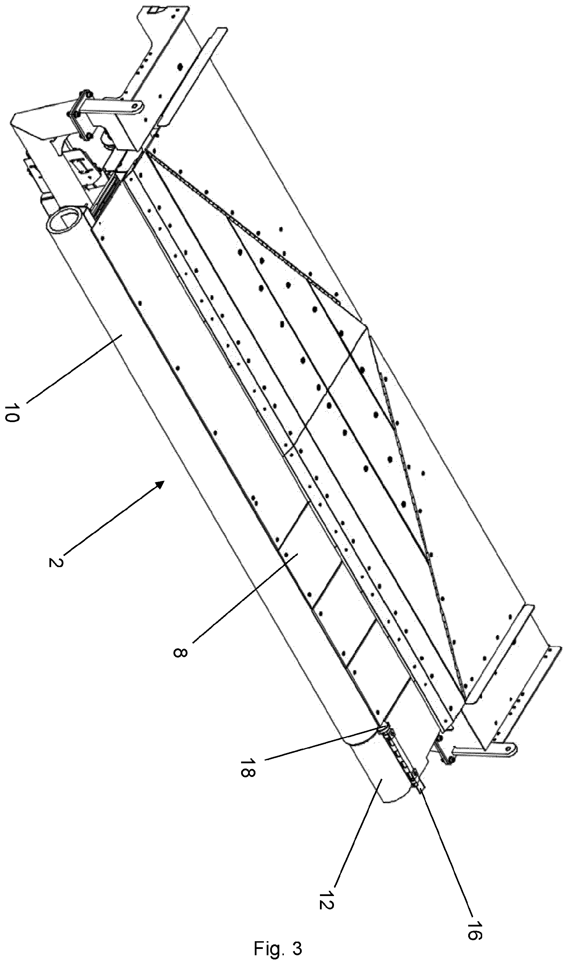

Das Scharnier 16 ist bei dem dargestellten Ausführungsbeispiel derart ausgebildet und auf dem Bodensegment 8 angebracht, dass das Bodenbumpersegment 12 in der aufgeschwenkten oder hochgeklappten Position auf der begehbaren Oberfläche des entsprechenden Bodensegments 8 aufliegt und in dieser Position verbleibt, bis es beispielsweise händisch wieder in seine Ausgangsposition verschwenkt wird, in der das Bodenbumpersegment 12 sich in Flucht zu dem übrigen Bodenbumper 10 befindet (Fig. 3).

Das Bodenbumpersegment 12 ist als schalenförmiges, längliches Element 17 aus einem elastisch nachgiebigem Kunststoff entsprechend dem Bodenbumper ausgebildet und ist mit dem Scharnier 16 z. B. verschraubt.

Alternativ oder zusätzlich zum händischen Aufschwenken oder Hochklappen des Bodenbumpersegments 12 kann ein Aktuator 18 als Schwenkantrieb vorgesehen sein, der elektrisch oder hydraulisch, z. B durch einen Schalter 18a, das Verschwenken des Bodenbumpersegments 12 bewirkt (Fig. 2, Fig. 3).

Der Aktuator 18 greift von unten an die Schwenkachse des Scharniers 16 bzw. das Bodenbumpersegment 12 an, um die Schwenkachse bzw. das Bodenbumpersegment 12 zu verschwenken. Grundsätzlich kann der Schwenkantrieb 18 auch von oben an die Achse des Scharniers 16 bzw. das Bodenbumpersegment 12 angreifen. Die Wahl hängt beispielsweise vom vorhandenen Bauraum ab.

Zusammenfassend ist demzufolge festzuhalten, dass bei dem in den Figuren gezeigten Ausführungsbeispiel durch das Hochklappen des Bodenbumpersegments 12 ein Freiraum geschaffen werden kann, sodass nicht die Gefahr der Beschädigung der Messgeräte besteht.

Gleichfalls besteht auch keine Verletzungsgefahr für Passagiere, beispielsweise durch größere Öffnungen im Boden des Kuppelmoduls, durch die z. B. auch Gegenstände auf das Flugfeld fallen könnten.

### Bezugszeichenliste:

- 1: Kuppelmodul
- 2: Boden
- 4: Faltenvordach
- 8: Bodensegment
- 10: Bodenbumper
- 12: Bodenbumpersegment
- 14: Bumper
- 16: Scharnier
- 17: Schalenförmiges Element
- 18: Aktuator
- 18a: Schalter

## Patentansprüche

1. Kuppelmodul (1) zur Verwendung als Schnittstelle zwischen einer Fluggastbrücke oder -treppe und dem Rumpf eines Flugzeugs, umfassend einen Boden (2), wobei zumindest der Boden (2) an seinem dem Flugzeugrumpf zugewandten Ende einen Bodenbumper (10) aufweist, wobei
der Bodenbumper (10) ein Bodenbumpersegment (12) aufweist, das mittels eines Gelenks um eine Schwenkachse gegenüber dem Boden (2) verschwenkbar angeordnet ist, **dadurch gekennzeichnet, dass**
der Boden (2) zumindest ein Bodensegment (8) aufweist,
das Gelenk nach Art eines Scharniers (16) ausgebildet und stirnseitig an, unter oder auf dem Bodensegment des Kuppelmoduls (1) angeordnet ist, und, dass die Schwenkachse in der Haupterstreckungsebene des Bodensegments (8) verläuft und parallel zu dessen Stirnseite orientiert ist.

2. Kuppelmodul (1) nach Anspruch 1,
**dadurch gekennzeichnet, dass** das Gelenk an dem Boden (2) des Kuppelmoduls (1) angeordnet ist.

3. Kuppelmodul (1) nach einem der voranstehenden Ansprüche,
**dadurch gekennzeichnet, dass** der Boden (2) des Kuppelmoduls (1) am vorderen Endbereich eine Mehrzahl von relativ zueinander verschieblichen Bodensegmenten (8) aufweist, wobei zumindest ein Bodensegment (8) das Bodenbumpersegment (12) durch das Gelenk um die Schwenkachse verschwenkbar aufnimmt.

4. Kuppelmodul (1) nach Anspruch 3,
**dadurch gekennzeichnet, dass** das Gelenk auf der Oberseite oder Unterseite des Bodensegments (8) angeordnet ist.

5. Kuppelmodul (1) nach einem der voranstehenden Ansprüche,
**dadurch gekennzeichnet, dass** das verschwenkbar angeordnete Bodenbumpersegment (12) einen Endbereich des Bodenbumpers (10) bildet.

6. Kuppelmodul (1) nach einem der voranstehenden Ansprüche,
**dadurch gekennzeichnet,**
**dass** der Bodenbumper (10) neben dem verschwenkbar angeordneten Bodenbumpersegment (12) mindestens ein gegenüber dem Boden (2) feststehend angeordnetes Bodenbumpersegment aufweist.

7. Kuppelmodul (1) nach einem der voranstehenden Ansprüche,
**dadurch gekennzeichnet, dass** das Bodenbumpersegment (12) als schalenförmiges, insbesondere halbschalenförmiges Element (17) ausgebildet ist.

8. Kuppelmodul (1) nach einem der voranstehenden Ansprüche,
**dadurch gekennzeichnet, dass** das Bodenbumpersegment (12) aus einem elastisch nachgiebigen Material ausgebildet ist.

9. Kuppelmodul (1) nach einem der voranstehenden Ansprüche,
**dadurch gekennzeichnet, dass** das Bodenbumpersegment (12) einen Schwenkantrieb aufweist.

10. Kuppelmodul (1) nach Anspruch 9,
**dadurch gekennzeichnet, dass** der Schwenkantrieb von unten oder von oben zur Einleitung einer Schwenkbewegung am Bodenbumpersegment (12) angreift.

11. Kuppelmodul (1) nach einem der voranstehenden Ansprüche,
**dadurch gekennzeichnet, dass** der Boden (2) des Kuppelmoduls (1) durch ein in der Vorderansicht U-förmiges Faltenvordach (4) umspannt ist.

12. Fluggastbrücke oder -treppe mit einem Kuppelmodul (1) zur Verwendung als Schnittstelle zwischen der Fluggastbrücke und -treppe und dem Rumpf eines Flugzeugs, wobei das Kuppelmodul (1) nach einem oder mehreren der Ansprüche 1 bis 11 ausgebildet ist.

## Claims

1. Coupling module (1) for use as an interface between a passenger bridge or passenger boarding stairs and the fuselage of an aircraft, comprising a floor (2), wherein at least the floor (2) has a floor bumper (10) at its end facing the aircraft fuselage,
the floor bumper (10) having a floor bumper segment (12) which is arranged so as to be pivotable about a pivot axis relative to the floor (2) by means of a joint, **characterized in that**
the floor (2) has at least one floor segment (8), the joint is designed in the manner of a hinge (16) and is arranged on the end face, under or on the floor segment of the coupling module (1), **and in that**
the pivot axis extends in the main extension plane of the floor segment (8) and is oriented in parallel with its end face.

2. Coupling module (1) according to claim 1,
**characterized in that** the joint is arranged on the floor (2) of the coupling module (1).

3. Coupling module (1) according to either of the preceding claims,
**characterized in that** the floor (2) of the coupling module (1) has a plurality of floor segments (8) that are displaceable relative to one another at the front end region, at least one floor segment (8) accommodating the floor bumper segment (12) so as to be pivotable about the pivot axis by the joint.

4. Coupling module (1) according to claim 3,
**characterized in that** the joint is arranged on the top side or bottom side of the floor segment (8).

5. Coupling module (1) according to any of the preceding claims,
**characterized in that** the pivotably arranged floor bumper segment (12) forms an end region of the floor bumper (10).

6. Coupling module (1) according to any of the preceding claims,
**characterized in that** the floor bumper (10) has, in addition to the pivotably arranged floor bump segment (12), at least one floor bumper segment arranged so as to be stationary relative to the floor (2).

7. Coupling module (1) according to any of the preceding claims,
**characterized in that** the bottom bumper segment (12) is designed as a shell-shaped, in particular half-shell-shaped element (17).

8. Coupling module (1) according to any of the preceding claims,
**characterized in that** the bottom bumper segment (12) is formed from an elastically flexible material.

9. Coupling module (1) according to any of the preceding claims,
**characterized in that** the floor bumper segment (12) has a pivot drive.

10. Coupling module (1) according to claim 9,
**characterized in that** the pivot drive engages the floor bumper segment from below or from above in order to initiate a pivoting movement (12).

11. Coupling module (1) according to any of the preceding claims,
**characterized in that** the floor (2) of the coupling module (1) is encompassed by a folding canopy (4) which is U-shaped in the front view.

12. Passenger bridge or passenger boarding stairs comprising a coupling module (1) for use as an interface between the passenger bridge and passenger boarding stairs and the fuselage of an aircraft, wherein the coupling module (1) is designed according to one or more of claims 1 to 11.

## Revendications

1. Module d'accouplement (1) destiné à être utilisé en tant qu'interface entre une passerelle ou un escalier d'embarquement et le fuselage d'un avion, comprenant un plancher (2), dans lequel au moins le plancher (2) présente, au niveau de son extrémité faisant face au fuselage d'avion, un bourrelet de plancher (10), dans lequel
le bourrelet de plancher (10) présente un segment de bourrelet de plancher (12) qui est disposé de manière à pouvoir pivoter, au moyen d'une articulation, autour d'un axe de pivotement par rapport au plancher (2), **caractérisé en ce que**
le plancher (2) présente au moins un segment de plancher (8), l'articulation est réalisée à la manière d'une charnière (16) et est disposée côté frontal au niveau du segment de plancher du module d'accouplement (1), sous celui-ci ou sur celui-ci, **et en ce que**
l'axe de pivotement s'étend dans le plan d'extension principal du segment de plancher (8) et est orienté parallèlement à son côté frontal.

2. Module d'accouplement (1) selon la revendication 1,
**caractérisé en ce que** l'articulation est disposée au niveau du plancher (2) du module d'accouplement (1).

3. Module d'accouplement (1) selon l'une des revendications précédentes,
**caractérisé en ce que** le plancher (2) du module d'accouplement (1) présente, au niveau de la zone d'extrémité avant, une pluralité de segments de plancher (8) pouvant être déplacés les uns par rapport aux autres, dans lequel au moins un segment de plancher (8) reçoit le segment de bourrelet de plancher (12) de manière à pouvoir pivoter autour de l'axe de pivotement au moyen de l'articulation.

4. Module d'accouplement (1) selon la revendication 3,
**caractérisé en ce que** l'articulation est disposée sur le côté supérieur ou le côté inférieur du segment de plancher (8).

5. Module d'accouplement (1) selon l'une des revendications précédentes,
**caractérisé en ce que** le segment de bourrelet de plancher (12) disposé de manière à pouvoir pivoter forme une zone d'extrémité du bourrelet de plancher (10).

6. Module d'accouplement (1) selon l'une des revendications précédentes,
**caractérisé en ce**
**que** le bourrelet de plancher (10) présente, outre le segment de bourrelet de plancher (12) disposé de manière à pouvoir pivoter, au moins un segment de bourrelet de plancher disposé de manière à être fixe par rapport au plancher (2).

7. Module d'accouplement (1) selon l'une des revendications précédentes,
**caractérisé en ce que** le segment de bourrelet de plancher (12) est réalisé sous forme d'élément (17) en forme de coque, en particulier en forme de demi-coque.

8. Module d'accouplement (1) selon l'une des revendications précédentes,
**caractérisé en ce que** le segment de bourrelet de plancher (12) est réalisé à partir d'un matériau élastiquement flexible.

9. Module d'accouplement (1) selon l'une des revendications précédentes,
**caractérisé en ce que** le segment de bourrelet de plancher (12) présente un entraînement pivotant.

10. Module d'accouplement (1) selon la revendication 9,
**caractérisé en ce que** l'entraînement pivotant agit par le bas ou par le haut sur le segment de bourrelet de plancher (12) pour l'initiation d'un mouvement de pivotement.

11. Module d'accouplement (1) selon l'une des revendications précédentes,
**caractérisé en ce que** le plancher (2) du module d'accouplement (1) est recouvert par un auvent à plis (4) en forme de U en vue de face.

12. Passerelle ou escalier d'embarquement comportant un module d'accouplement (1) destiné à être utilisé en tant qu'interface entre la passerelle et l'escalier d'embarquement et le fuselage d'un avion, dans lequel le module d'accouplement (1) est réalisé selon une ou plusieurs des revendications 1 à 11.
